# EUROPEAN PATENT SPECIFICATION

(11) **EP 1 372 145 B1**
(45) Date of publication and mention of the grant of the patent: **28.01.2009**
(21) Application number: 02256846.3
(22) Date of filing: 02.10.2002
(51) Int. Cl.: G11B 7/09

(54) **Actuator for optical pickup**
Stellantrieb für optisches Abtastgerät
Actionneur pour tête de lecture optique

(30) Priority: 24.05.2002 KR 2002028922
(43) Date of publication of application: 17.12.2003
(73) Proprietor: SAMSUNG ELECTRONICS CO., LTD., Suwon-City, Kyungki-do (KR)
(72) Inventor: Lee, Jin-won, Bundang-gu, Seougnam-si, Gyeonggi-do (KR); Kim, Kwang, Paldal-gu, Suwon-si, Gyeonggi-do (KR); Cheong, Young-min, Dobong-gu, Seoul (KR)
(74) Representative: Robinson, Ian Michael

(56) References cited:
- EP-A- 1 098 304
- US-A- 5 663 840

## Description

The present invention relates to an actuator for an optical pickup, and more particularly, to an actuator for an optical.

In general, optical pickups record information by irradiating light to a disc as a recording medium through an objective lens or reproduce information by receiving light that is reflected from the disc. Optical pickups include an actuator which adjusts the position of the objective lens such that light is irradiated to a precise position of the disc.

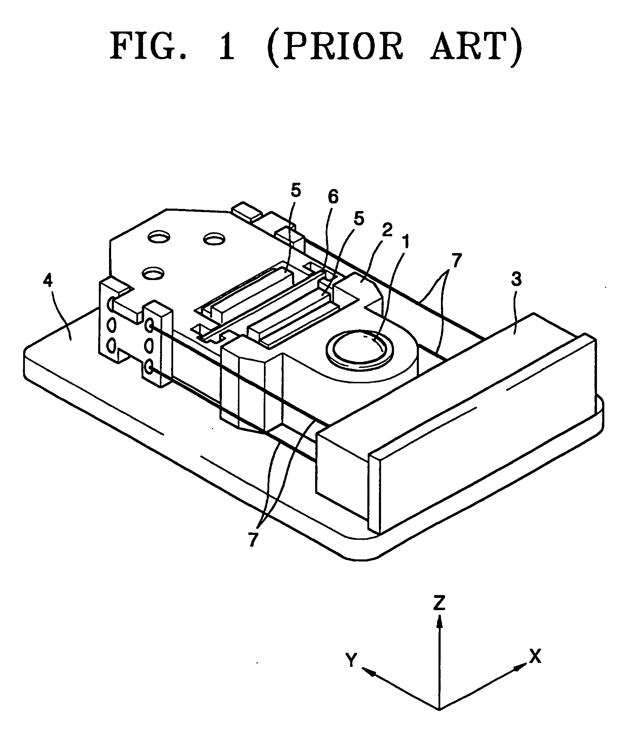

Figure 1 illustrates the structure of a conventional actuator for an optical pickup. Referring to Figure 1, the actuator for an optical pickup includes a support 20 on which an objective lens 1 is mounted, a plurality of wires 7 which supports the support 2 in order to enable the support 20 to move toward a holder 3, a pair of magnets 5 which is installed on a base 4 as an electromagnetic drive unit which drives the support 2 in a focusing direction Z and a tracking direction X and adjusts the position of the objective lens 1, and a plate coil 6 which is installed on the support 2 to be arranged between the pair of magnets 5.

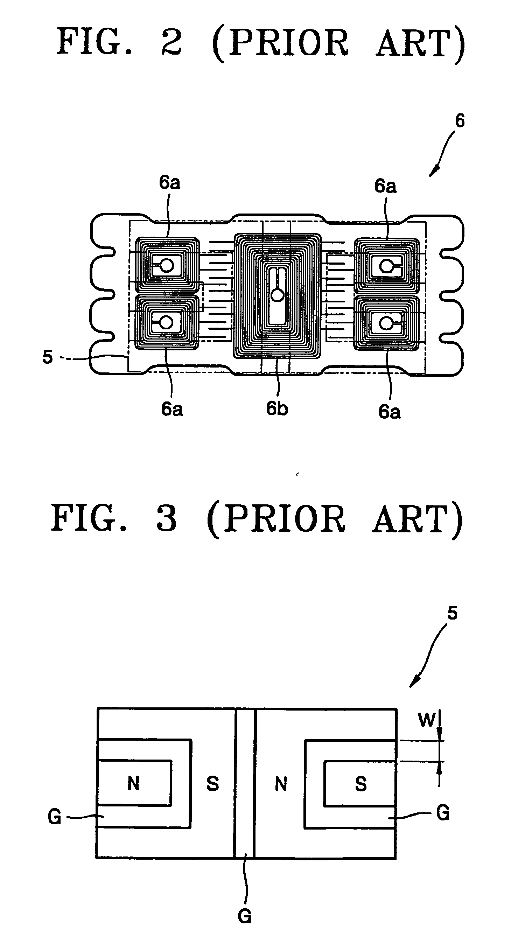

As shown in Figure 2, a plurality of pattern coils 6a and 6b are formed in the plate coil 6. Thus, if current flows through the plurality of pattern coils 6a and 6b, an electromagnetic force caused by interaction with the magnets 5 is generated, and thus the support 2 is driven. Reference numerals 6a and 6b denote a focusing coil and a tracking coil, respectively. In the prior art, a winding coil wound in a predetermined position of the support 2 instead of the plate coils 6a and 6b is employed, but the plate coil 6 is preferred for reducing the size of optical pickups.

As shown in Figures 2 and 3, one side of each magnet 5 is polarized into several portions. Since the pattern coils 6a and 6b for focusing and tracking are placed on one plane due to the structural characteristics of the plate coil 6, each magnet 5 is formed in a polarized structure as in Figures 2 and 3, so as to form magnetic force lines corresponding to each of the pattern coils 6a and 6b.

If one side of each magnet 5 is polarized into several portions, a magnetized gap G exists between the poles of each of the magnets 5. The magnetized gap G generally has the width W of about 0.2 - 1.2 mm, the size of a slim type magnet is only 3.5 - 4 mm, the size of a half-height type magnet is only 5 -7 mm, and thus, the width W of the magnetized gap G cannot be ignored. In particular, as shown in Figures 2 and 3, in a structure where the magnetized gap G is formed in three places in a horizontal direction and in two places in a vertical direction, the sum of the width W of the magnetized gap G affects more the size of each of the magnets 5. Furthermore, if polarization becomes more active, the effective magnet area required to generate an electromagnetic force is reduced, and thus sensitivity is lowered.

Thus, actuators for optical pickups which can minimize the number of polarizations of a magnet and prevent a decrease in actuator sensitivity are necessary.

With a view to solve or reduce the above problems, it is an aim of embodiments of the present invention to provide an actuator for an optical pickup which can prevent a decrease in actuator sensitivity and reduce the size of the optical pickup by reducing the number of polarizations of a magnet.

According to a first aspect of the invention there is provided an actuator for an optical pickup so as to drive a support, on which an objective lens is mounted, in focusing and tracking directions, the actuator comprising: a pair of magnets installed on a base; and a plate coil installed in the support to be placed between the magnets; wherein each magnet has a shape in which N and S poles of the magnet are alternately magnetized in four regions asymmetrically split vertically and horizontally.

Preferably, the plate coil includes a focusing substrate on which a focusing coil is formed, and a tracking substrate that is attached to the focusing substrate, on which a tracking coil is formed.

Preferably, the focusing coil is formed of a pair of closed loops that are arranged symmetrically with respect to a vertical line, and the tracking coil is formed of a pair of closed loops that are arranged up and down with respect to a horizontal line passing through the center of the focusing coil and arranged symmetrically with respect to the vertical line.

Preferably, there is provided a magnetized gap forming a boundary between the four regions of the magnet comprises: a horizontal magnetized gap which passes the magnet in a horizontal direction and splits the magnet into two portions up and down; a first vertical magnetized gap which splits the magnet asymmetrically with respect to a vertical line, from the upper portion of the horizontal magnetized gap; and a second vertical magnetized gap which splits the magnet asymmetrically in a right and left ratio opposite to that of the first vertical magnetized gap from the lower portion of the horizontal magnetized gap.

For a better understanding of the invention, and to show how embodiments of the same may be carried into effect, reference will now be made, by way of example, to the accompanying diagrammatic drawings in which:
Figure 1 illustrates a conventional actuator for an optical pickup;
Figure 2 illustrates an electromagnetic driving unit of the actuator for an optical pickup shown in Figure 1;
Figure 3 illustrates magnets of the electromagnetic driving unit show in Figure 2;
Figure 4 illustrates an actuator for an optical pickup according to an embodiment of the present invention;
Figure 5 illustrates an electromagnetic driving unit of the actuator for an optical pickup shown in Figure 4;
Figure 6 illustrates a plate coil of the electromagnetic driving unit shown in Figure 5;
Figure 7 illustrates correlation of an initial position between the plate coil and a magnet of the electromagnetic driving unit shown in Figure 5;
Figures 8A through 11B illustrate position variations caused by the control from the initial position shown in Figure 7; and
Figures 12 through 15 are graphs comparing sensitivity variations of the prior art caused by the displacement of the actuator for an optical pickup with those of embodiments of the present invention, respectively.

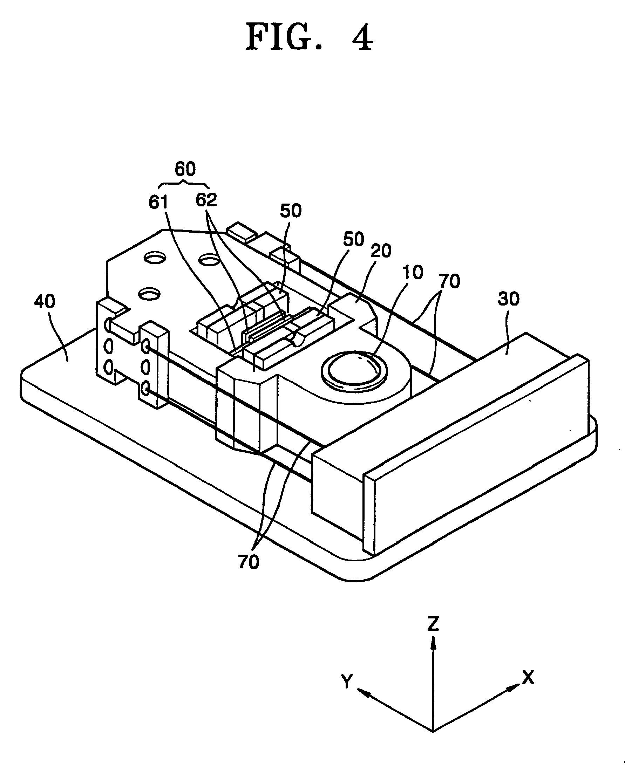

Figure 4 illustrates the structure of an actuator for an optical pickup according to the present invention. Referring to Figure 4, a holder 30 is placed on a base 30, and a support 20 on which an objective lens 10 is mounted, is supported by a plurality of wires 70 in order to enable the support 20 to move toward the holder 30. And an electromagnetic driving unit which drives the support 20 in a focusing direction Z and in a tracking direction X and controls the position of the objective lens 10, is provided. The electromagnetic driving unit includes a pair of magnets 50 that is installed to be opposite to the base 40 and a plate coil 60 that is installed in the support 20 to be placed between the magnets of the pair of magnets 50.

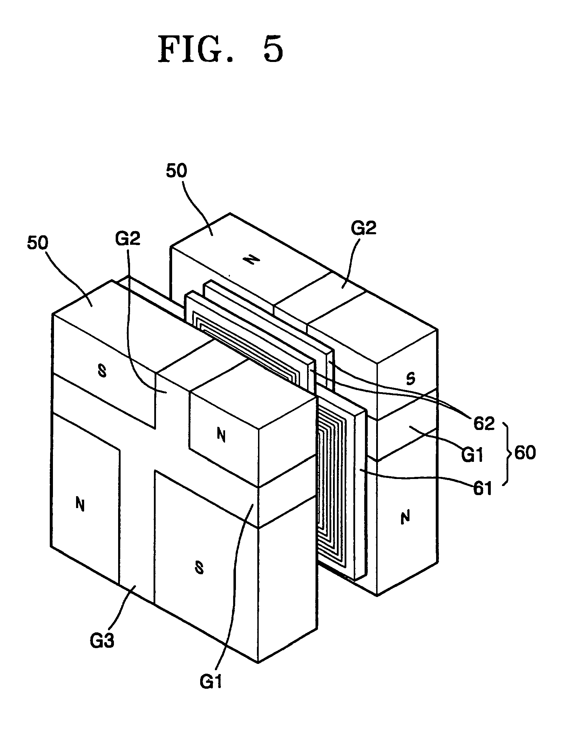

As shown in Figure 5, each magnet of the pair of magnets 50 has a shape in which N and S poles of the magnet 50 are alternately magnetized in four regions asymmetrically split vertically and horizontally. Namely, each magnet of the pair of magnets 50 is split up and down into two portions by a horizontal magnetized gap G1, and the horizontal magnetized gap G1 has a shape in which upper and lower portions are split while passing a portion higher than the center of each magnet of the pair of magnets 50. Thus, the upper and lower portions of the horizontal magnetized gap G1 are asymmetrically split into two portions. Likewise, the upper portion of the horizontal magnetized gap G1 of the two portions split up and down, is again split into two portions by a first vertical magnetized gap G2. The first vertical magnetized gap G2 is asymmetrically split right and left toward the right of Figure 5 from the center of each magnet of the pair of magnets 50. Also, the lower portion of the horizontal magnetized gap G1 is split right and left by a second vertical magnetized gap G3. The second vertical magnetized gap G3 is asymmetrically split right and left toward the left of Figure 5 from the center of each magnet of the pair of magnets 50. N and S poles of each magnet of the pair of magnets 50 are alternatively magnetized in the split four portions. Of course, an opposite pole is arranged at the opposite side of each magnet of the pair of magnets 50 so as to generate an attractive force.

The plate coil 60 is placed between the magnets of the pair of magnets 50 that are asymmetrically four-split and magnetized. The plate coil 60 includes a focusing substrate 61 on which a focusing coil 61a is formed, and a tracking substrate 62 on which a tracking coil 62a is formed. The focusing coil 61a of the focusing substrate 61 is formed of a pair of closed loops that are arranged symmetrically with respect to a vertical line V. The tracking coil 62a of the tracking substrate 62 is formed of a pair of closed loops that are arranged up and down with respect to a horizontal line H passing through the center of the focusing coil 61a, and arranged symmetrically with respect to the vertical line V. The tracking substrate 62 is attached to front and back sides of the focusing substrate 61, respectively, in the same form.

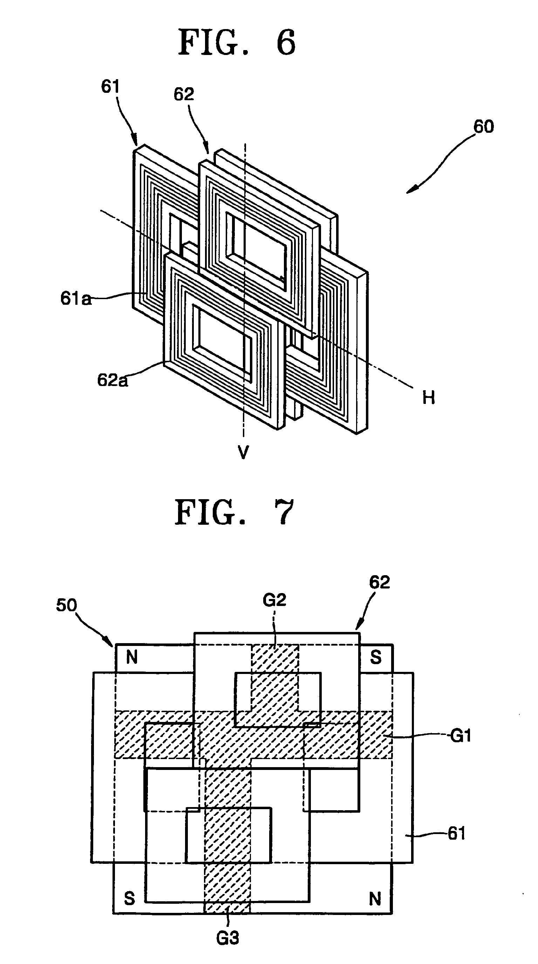

Initial relative positions of each magnet of the pair of magnets 50 and the plate coil 60 are as shown in Figure 7. In this state, if position control of the objective lens 10 is performed, current flows through the plate coil 60 and thus the support 20 moves. Here, the plate coil 60 is fixed in the support 20. The movement of the support 20 in the position of the plate coil 60 will be described below.

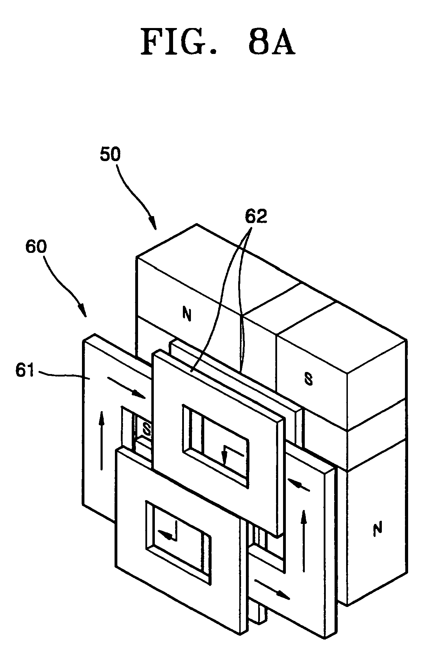

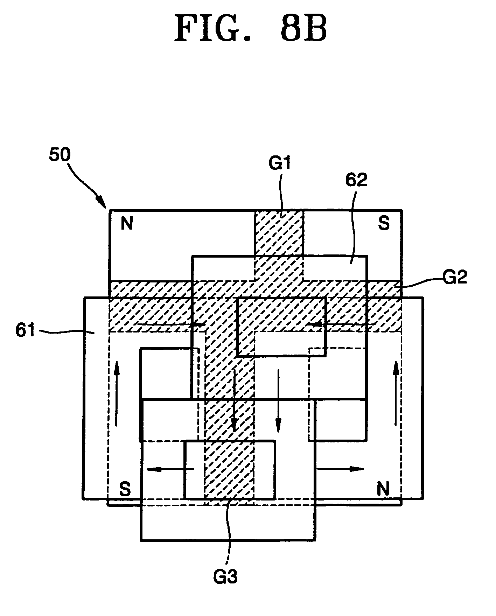

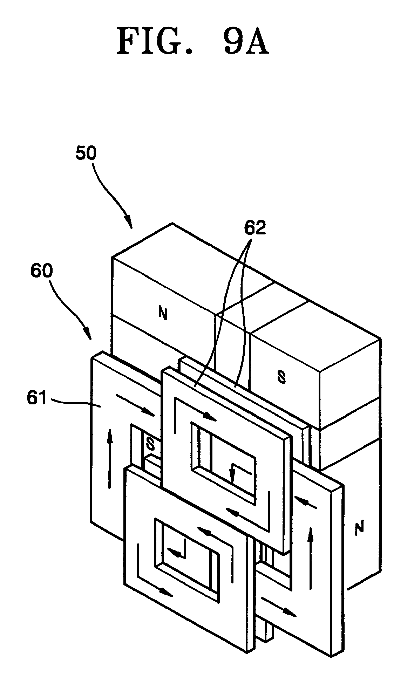

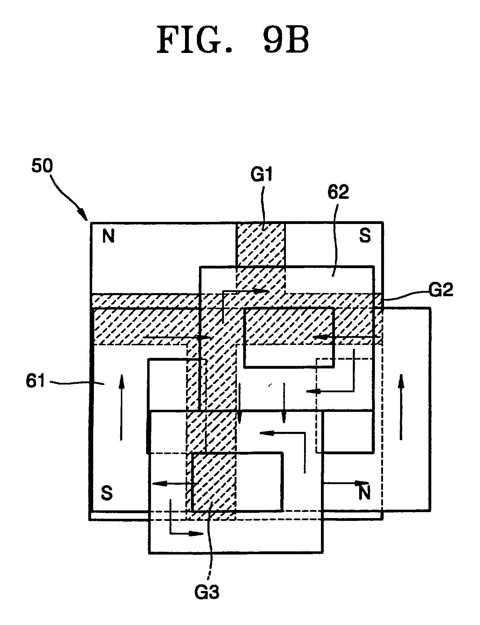

Figures 8A and 8B illustrate the relative positions of each magnet of the pair of magnets 50 and the plate coil 60 when focusing control is performed downward and thus the support 20 descends in the lowest position. And Figures 9A and 9B illustrate the case where tracking control is performed in the descended state as in Figure 8A, and thus the support 20 moves to a right limit. According to embodiments of the present invention, there are only the first and second vertical magnetized gaps G2 and G3 in a horizontal direction, and thus the effective area of the magnet is relatively large compared to the structure of the prior art shown in Figure 1. Even if it seems that a two-stage gap is formed by the first and second vertical magnetized gaps G2 and G3 in a horizontal direction, this is actually the same as a one-stage gap because the first and second vertical magnetized gaps G2 and G3 are alternately arranged for asymmetrical division. Thus, an effective area of the magnet larger than of the prior art can be obtained. This is in close relation with the sensitivity increase of the actuator for an optical pickup. As shown in Figures 8A through 9B, even though focusing control and tracking control are simultaneously performed and thus the support 20 moves to an extreme position, the effective area of each magnet of the pair of magnets 50 which faces the plate coil 60 can be effectively maintained.

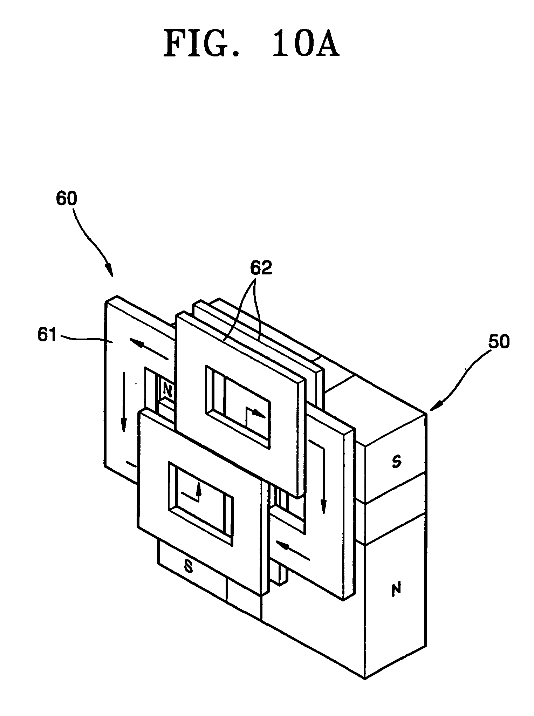

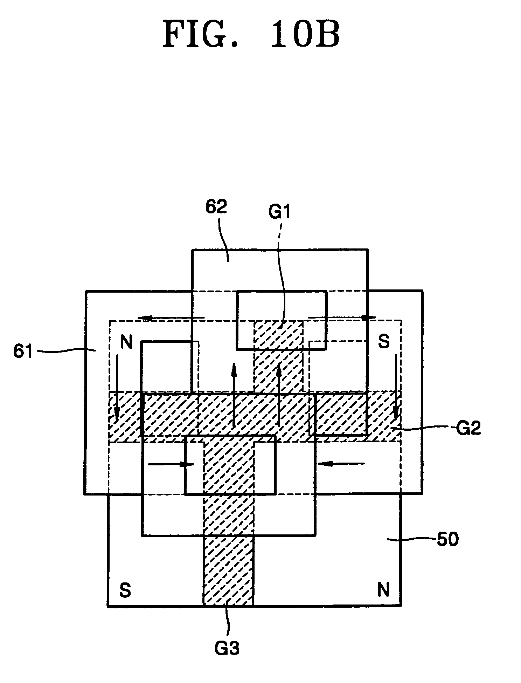

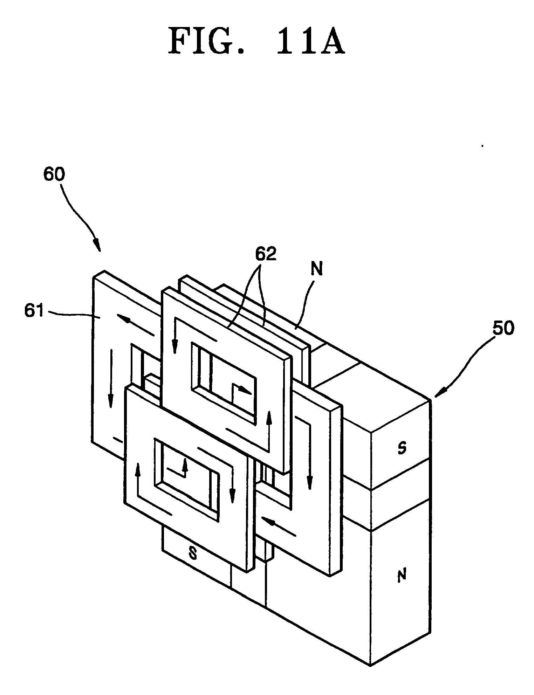

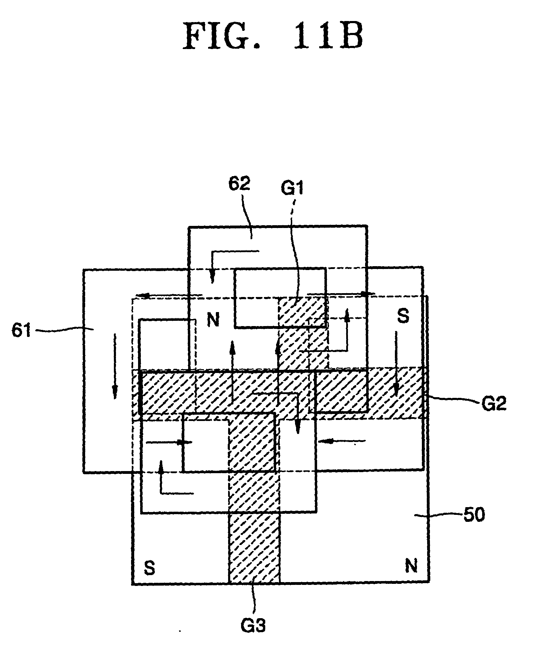

Conversely, Figures 10A and 10B illustrate the relative positions of each magnet of the pair of magnets 50 and the plate coil 60 when focusing control is performed upward, and thus the support 20 ascends in the highest position. Figures 11A and 11B illustrate the case where tracking control is performed in the ascended state as in Figure 10A, and thus the support 20 moves to a left limit. Similarly, even though the support 20 moves to the extreme position, the effective area between the plate coil 60 and each magnet of the pair of magnets 50 that are used for tracking control, can be effectively maintained.

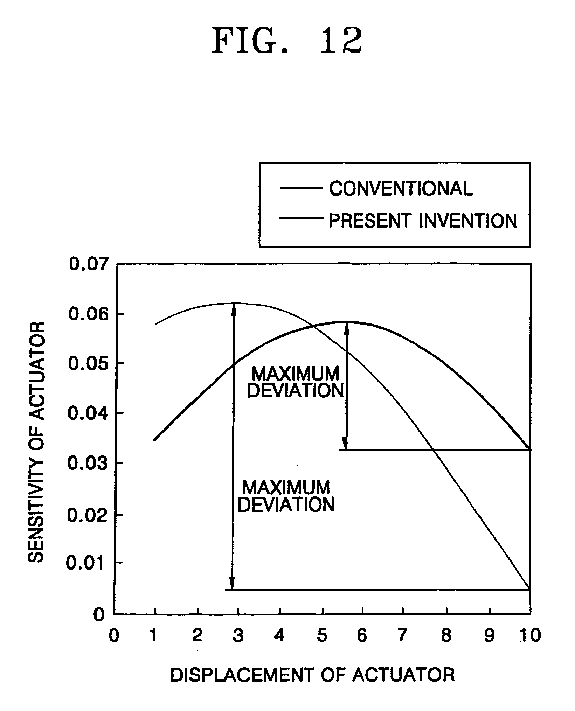

If the effective area is maintained by each magnet of the pair of magnets 50 that is asymmetrically magnetized and the plate coil 60 corresponding to each magnet of the pair of magnets 50, the sensitivity of the actuator for an optical pickup can be increased. If the sensitivity of the actuator for an optical pickup is high, a higher force which moves the support 20 can be obtained in case of the same current supplied. Figures 12 through 15 are graphs comparing sensitivity variations of the prior art caused by the displacement of the actuator for an optical pickup with those of embodiments of the present invention, respectively. Maximums of the graphs represent the sensitivity in an initial state where focusing or tracking control is not performed, i.e., maximum forces which affect the actuator for an optical pickup in case of the same current supplied. In this case, the effective area where magnetized portions of the focusing coil 61a, the tracking coil 62a, and the magnets of the pair of magnets 50 face one another, is the largest, and thus the largest sensitivity of the actuator for an optical pickup can be obtained. If the support 20 moves in the focusing direction Z or the tracking direction X from the highest points, the effective area is reduced gradually, and thus the sensitivity of the actuator for an optical pickup is reduced gradually.

Figure 12 illustrates sensitivity variations in the focusing direction caused by the displacement of the actuator in the focusing direction. It can be known from Figure 12 that a deviation between a maximum value and a minimum value is reduced greatly in the structure of the present invention than in a conventional structure. That is, the sensitivity in the initial state in the conventional structure is nearly similar to the sensitivity in the initial state in structures according to embodiments of the present invention, but the sensitivity in the initial state in the conventional structure is rapidly reduced when focusing control begins, and thus the displacement of the support 20 increases. However, the lowering of the sensitivity is not severe in the structure according to embodiments of the present invention, and thus a sensitivity like that in the initial state can be maintained.

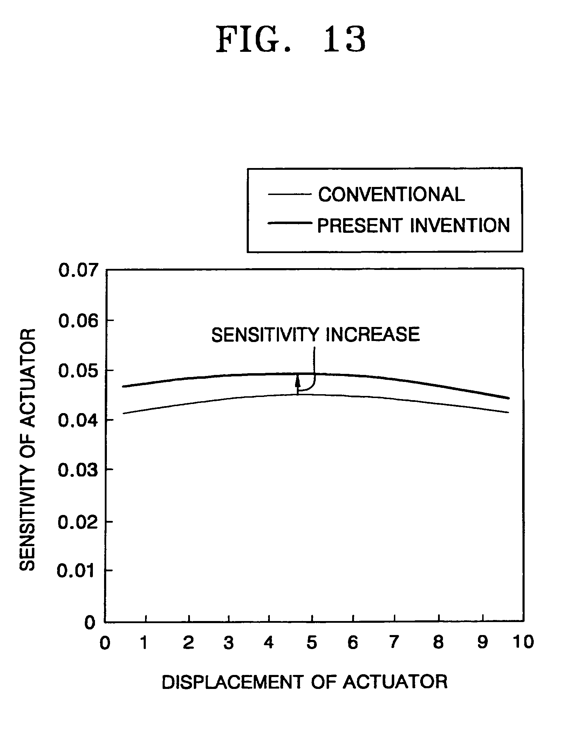

Figure 13 illustrates sensitivity variations in the focusing direction caused by the displacement of the actuator in the tracking direction. It can be known from Figure 13 that the sensitivity of the actuator for an optical pickup according to embodiments of the present invention is higher compared with that of a conventional actuator for an optical pickup.

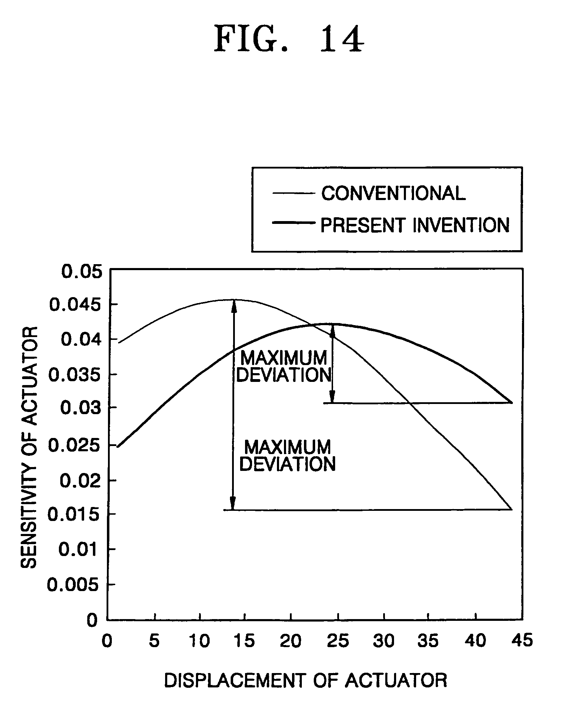

Figure 14 illustrates sensitivity variations in the tracking direction caused by the displacement of the actuator in the focusing direction. Similarly, it can be known from Figure 14 that the deviation between the maximum value and the minimum value is reduced more compared with that of the conventional actuator for an optical pickup.

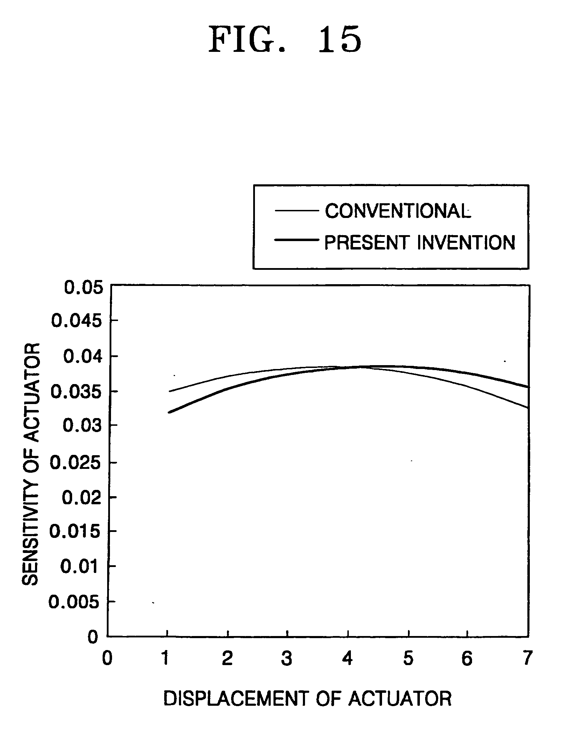

Figure 15 illustrates sensitivity variations in the tracking direction caused by the displacement of the actuator in the tracking direction. It can be known from Figure 15 that the conventional actuator for an optical pickup and the actuator for an optical pickup according to embodiments of the present invention show similar sensitivity.

Hence, it can be overall known that the actuator for an optical pickup according to embodiments of the present invention is less affected by sensitivity variations caused by the movement of the support 20 compared with that of the conventional actuator for an optical pickup. This is because the effective area between the plate coil 60 and the magnet 50 is properly maintained even though the support 20 is displaced. Consequently, the actuator for an optical pickup can reduce the size of the electromagnetic driving unit by reducing the number of magnetized gaps that are formed on each magnet of the pair of magnets 50, while being less affected by sensitivity variations when the support 20 moves.

As described above, the actuator has the following advantages: first, since the number of magnetized gaps formed on one magnet is reduced in horizontal and vertical directions, the entire actuator for an optical pickup can be made slim by reducing the size of the electromagnetic driving unit; and second, sensitivity variations caused by the displacement of the support can be reduced during focusing and tracking control, and thus the reliability of control is increased.

While this invention has been particularly shown and described with reference to preferred embodiments thereof, it will be understood by those skilled in the art that various changes in form and details may be made therein without departing from the scope of the invention as defined by the appended claims.

## Claims

1. An actuator for an optical pickup so as to drive a support (20), on which an objective lens (10) is mounted, in focusing and tracking directions, the actuator comprising:
a pair of magnets (50) installed on a base (40); and
a plate coil (60) installed in the support (20) to be placed between the magnets (50);
wherein each magnet (50) has a shape in which N and S poles of the magnet are alternately magnetized in four regions asymmetrically split vertically and horizontally.

2. The actuator of claim 1, wherein the plate coil (60) includes a focusing substrate (61) on which a focusing coil (61a) is formed, and a tracking substrate (62) that is attached to the focusing substrate (61), on which a tracking coil (62a) is formed.

3. The actuator of claim 2, wherein the focusing coil (61a) is formed of a pair of closed loops that are arranged symmetrically with respect to a vertical line, and the tracking coil (62a) is formed of a pair of closed loops that are arranged up and down with respect to a horizontal line passing through the center of the focusing coil (61a) and arranged symmetrically with respect to the vertical line.

4. The actuator of claim 1, 2 or 3, wherein a magnetized gap forming a boundary between the four regions of the magnet comprises:
a horizontal magnetized gap (91) which passes the magnet in a horizontal direction and splits the magnet into two portions up and down;
a first vertical magnetized gap (92) which splits the magnet asymmetrically with respect to a vertical line, from the upper portion of the horizontal magnetized gap; and
a second vertical magnetized gap (93) which splits the magnet asymmetrically in a right and left ratio opposite to that of the first vertical magnetized gap from the lower portion of the horizontal magnetized gap.

## Patentansprüche

1. Stellantrieb für ein optisches Abtastgerät, um eine Abstützung (20), auf der eine Objektivlinse (10) befestigt ist, in eine Fokussier- und Spurführungsrichtung anzutreiben, wobei der Stellantrieb Folgendes umfasst:
ein auf einer Basis (40) befestigtes Paar Magnete (50); und
eine in der Abstützung (20) befestigte Plattenspule (60), die zwischen den Magneten (50) anzuordnen ist;
wobei jeder Magnet (50) eine Gestalt aufweist, bei der N- und S-Pol des Magnets alternierend in vier Bereichen, vertikal und horizontal asymmetrisch geteilt, magnetisiert sind.

2. Stellantrieb nach Anspruch 1, wobei die Plattenspule (60) ein Fokussiersubstrat (61), auf dem eine Fokussierspule (61a) ausgebildet ist, und ein Spurführungssubstrat (62) enthält, das an dem Fokussiersubstrat (61) angebracht ist, auf dem eine Spurführungsspule (62) ausgebildet ist.

3. Stellantrieb nach Anspruch 2, wobei die Fokussierspule (61a) aus einem Paar geschlossener Schleifen ausgebildet ist, die mit Bezug auf eine vertikale Linie symmetrisch angeordnet sind, und die Spurführungsspule (62a) ist aus einem Paar geschlossener Schleifen ausgebildet, die oben und unten mit Bezug auf eine horizontale Linie angeordnet sind, die durch das Zentrum der Fokussierspule (61a) läuft und symmetrisch mit Bezug auf eine vertikale Linie angeordnet ist.

4. Stellantrieb nach Anspruch 1, 2 oder 3, wobei ein eine Grenze zwischen den vier Bereichen des Magnets ausbildender magnetisierter Spalt Folgendes umfasst:
einen horizontalen magnetisierten Spalt (G1), der den Magnet in einer horizontalen Richtung durchläuft und den Magnet in zwei Teile oben und unten teilt;
einen ersten vertikalen magnetisierten Spalt (G2), der den Magnet asymmetrisch mit Bezug auf eine vertikale Linie von dem oberen Teil des horizontalen magnetisierten Spalts teilt; und
einen zweiten vertikalen magnetisierten Spalt (G3), der den Magnet asymmetrisch in einen rechten und linken Anteil gegenüber dem des ersten vertikalen magnetisierten Spalts von dem unteren Teil des horizontalen magnetisierten Spalts teilt.

## Revendications

1. Actionneur pour tête optique destiné à entraîner un support (20) sur lequel est montée une lentille objective (10) dans des directions de focalisation et de suivi de piste, l'actionneur comprenant :
une paire d'aimants (50) installés sur un socle (40) ; et
une bobine plaquette (60) installée dans le support (20) et destinée à être mise en place entre les aimants (50) ;
chaque aimant (50) possédant une forme suscitant l'aimantation alternée de ses pôles N et S dans quatre régions divisées asymétriquement dans des directions verticale et horizontale.

2. Actionneur selon la revendication 1, la bobine plaquette (60) comportant un substrat de focalisation (61) sur lequel est formée une bobine de focalisation (61a), et un substrat de suivi de piste (62) qui est fixé au substrat de focalisation (61) et sur lequel est formée une bobine de suivi de piste (62a).

3. Actionneur selon la revendication 2, la bobine de focalisation (61a) étant formée d'une paire de boucles fermées agencées symétriquement par rapport à une ligne verticale, et la bobine de suivi de piste (62a) étant formée d'une paire de boucles fermées agencées au-dessus et en dessous d'une ligne horizontale passant par le centre de la bobine de focalisation (61a) et agencées symétriquement par rapport à la ligne verticale.

4. Actionneur selon la revendication 1, 2 ou 3, un entrefer aimanté formant une limite entre les quatre régions de l'aimant comprenant :
un intervalle aimanté horizontal (G1) qui traverse l'aimant dans une direction horizontale et divise celui-ci en deux parties de dessus et de dessous ;
un premier intervalle aimanté vertical (G2) qui divise l'aimant asymétriquement par rapport à une ligne verticale, en partant de la partie supérieure de l'intervalle aimanté horizontal ; et
un deuxième intervalle aimanté horizontal (G3) qui divise l'aimant asymétriquement selon un rapport droite/gauche inverse à celui du premier intervalle aimanté vertical, en partant de la partie inférieure de l'intervalle aimanté horizontal.
